# EUROPÄISCHE PATENTSCHRIFT

(11) **EP 3 775 604 B1**
(45) Veröffentlichungstag und Bekanntmachung des Hinweises auf die Patenterteilung: **10.05.2023**
(21) Anmeldenummer: 19718587.9
(22) Anmeldetag: 03.04.2019
(51) Int. Cl.: F16F 1/38, F16C 27/06

(54) **GUMMILAGER**
RUBBER BEARING
PALIER EN CAOUTCHOUC

(30) Priorität: 05.04.2018 DE 102018108029
(43) Veröffentlichungstag der Anmeldung: 17.02.2021
(73) Patentinhaber: BOGE Elastmetall GmbH, 49401 Damme (DE)
(72) Erfinder: FANGMANN, Michael, 49393 Lohne (DE)
(74) Vertreter: Bossmeyer, Jörg Peter
(86) Internationale Anmeldenummer: PCT/EP2019/058442
(87) Internationale Veröffentlichungsnummer: WO 2019/193076

(56) Entgegenhaltungen:
- EP-A1- 0 496 044
- EP-A2- 1 977 917
- DE-A1-102015 016 454

## Beschreibung

Die Erfindung betrifft ein Gummilager mit einem sich in einer axialen Richtung erstreckenden Innenteil, einer das Innenteil im Abstand umringenden Außenhülse, die aus zwei als Gleichteile ausgebildeten Halbschalen besteht und/oder zusammengesetzt ist und einem zwischen dem Innenteil und der Außenhülse angeordneten Gummikörper.

Ein derartiges Gummilager wird z.B. zur Anbindung eines Achsträgers oder Fahrschemels an einen Fahrzeugaufbau eines Fahrzeugs eingesetzt. Nachteilig an diesem Gummilager ist, dass sich die Halbschalen relativ zueinander bewegen können, was mit einer unerwünschten Geräuschentwicklung verbunden ist.

EP 1 977 917 A2 offenbart die Merkmale des Oberbegriffs von Anspruch 1.

Ausgehend hiervon liegt der Erfindung die Aufgabe zugrunde, eine Relativbewegung der Halbschalen zueinander vermeiden oder zumindest reduzieren zu können.

Diese Aufgabe wird erfindungsgemäß mit meinem Gummilager nach Anspruch 1 gelöst. Bevorzugte Weiterbildungen sind in den Unteransprüchen und in der nachfolgenden Beschreibung gegeben.

Das eingangs genannte Gummilager mit einem sich in einer axialen Richtung erstreckenden Innenteil, einer das Innenteil im Abstand umringenden Außenhülse, die aus zwei als Gleichteile ausgebildeten Halbschalen besteht und/oder zusammengesetzt ist und einem zwischen dem Innenteil und der Außenhülse angeordneten Gummikörper, ist erfindungsgemäß insbesondere dadurch weitergebildet, dass die Halbschalen mittels des Gummikörpers mit dem Innenteil verbunden sind und an ihren einander zugewandten umfangsseitigen Enden Vorsprünge und Vertiefungen aufweisen, in welche die Vorsprünge eingerückt oder einrückbar sind.

Durch Einrücken der Vorsprünge in die Vertiefungen ist eine formschlüssige Verbindung zwischen den Halbschalen ausbildbar, die eine Relativbewegung der Halbschalen zueinander verhindert oder zumindest reduziert. Somit kann eine unerwünschte Geräuschentwicklung aufgrund einer Relativbewegung der Halbschalen zueinander vermieden oder reduziert werden. Zusätzlich sind beide Halbschalen durch den Gummikörper miteinander und mit dem Innenteil verbunden. Dies bietet nicht nur Vorteile beim Einbau des Gummilagers, da die Halbschalen durch den Gummikörper, vorzugsweise verliersicher, miteinander und mit dem Innenteil verbunden sind, sondern erlaubt insbesondere auch ein korrektes Ausrichten der Vertiefungen und der Vorsprünge zueinander, sodass diese problemlos in die Vertiefungen einrücken können. Bevorzugt trägt auch der Gummikörper zu einer Einschränkung der Beweglichkeit der beiden Halbschalen zueinander bei. Schließlich ermöglicht die Ausbildung der Halbschalen als Gleichteile eine kostengünstige und einfache Herstellung des Gummilagers.

Das Gummilager ist insbesondere für ein Fahrzeug vorgesehen, welches vorzugsweise ein Kraftfahrzeug ist. Vorteilhaft ist oder bildet das Gummilager ein Fahrzeugteil.

Dem Gummilager und/oder der Außenhülse ist insbesondere eine in axialer Richtung verlaufende Lagerlängsachse zugeordnet, die vorzugsweise mittig durch das Gummilager und/oder durch die Außenhülse hindurch verläuft. Bevorzugt erstreckt sich die Außenhülse in axialer Richtung und/oder in Richtung der Lagerlängsachse. Dem Innenteil ist insbesondere eine, vorzugsweise in axialer Richtung verlaufende, Innenteillängsachse zugeordnet, die bevorzugt mittig durch das Innenteil hindurch verläuft. Vorteilhaft erstreckt sich das Innenteil in Richtung der Innenteillängsachse. Beispielsweise fällt die Innenteillängsachse mit der Lagerlängsachse zusammen und/oder die Innenteillängsachse verläuft z.B. parallel zu der Lagerlängsachse. Eine oder jedwede quer zur axialen Richtung und/oder zur Lagerlängsachse und/oder zur Innenteillängsachse verlaufende Richtung wird insbesondere als radiale Richtung bezeichnet. Beispielsweise ist die Innenteillängsachse gegenüber der Lagerlängsachse, insbesondere in radialer Richtung, versetzt. Ferner wird eine um die Lagerlängsachse und/oder um die Innenteillängsachse und/oder um das Innenteil und/oder um die Außenhülse herum verlaufende Richtung bevorzugt als Umfangsrichtung bezeichnet.

Das Innenteil ist vorzugsweise zylindrisch oder quaderförmig ausgebildet. Beispielsweise weist das Innenteil, insbesondere im Querschnitt, eine kreisförmige, eine ovale oder eine rechteckige oder quadratische Außenumfangskontur auf. Bevorzugt erstreckt sich, insbesondere in axialer Richtung, durch das Innenteil ein Durchgangsloch hindurch, welches vorzugsweise Befestigungszwecken dient. Vorteilhaft ist in das Durchgangsloch ein Befestigungsmittel eingebracht oder einbringbar, mittels welchem das Innenteil an einem, insbesondere ersten, Bauteil befestigt oder befestgibar ist, welches vorzugsweise ein, insbesondere erstes, Fahrzeugbauteil ist. Das Befestigungsmittel ist z.B. eine Schraube oder ein Bolzen oder ein Schraubbolzen. Das Innenteil ist oder bildet bevorzugt einen formstabilen Körper. Beispielsweise besteht das Innenteil aus Kunststoff oder aus Metall. Vorzugsweise besteht das Innenteil aus Aluminium oder aus Magnesium oder aus einem Eisenwerkstoff, wie z.B. Stahl.

Jede der Halbschalen ist vorzugsweise als oder im Wesentlichen als hohler Halbzylinder ausgebildet. Beispielsweise weist jede der Halbschalen, insbesondere im Querschnitt, eine halbkreisförmige Außenumfangskontur auf. Bei, vorzugsweise vollständig, in die Vertiefungen eingerückten Vorsprüngen ist die Außenhülse bevorzugt als oder im Wesentlichen als hohler Zylinder ausgebildet. Beispielsweise weist die Außenhülse bei, vorzugsweise vollständig, in die Vertiefungen eingerückten Vorsprüngen, insbesondere im Querschnitt, eine kreisförmige Außenumfangskontur auf. Die Halbschalen sind oder bilden insbesondere separate Halbschalen oder Teile. Jede der Halbschalen ist oder bildet bevorzugt einen formstabilen Körper. Vorzugsweise besteht jede der Halbschalen aus Kunststoff oder aus Metall. Beispielsweise besteht jede der Halbschalen aus Aluminium oder Aluminium-Druckguss.

Bevorzugt erstreckt sich der Gummikörper, vorzugsweise in radialer Richtung, von dem Innenteil bis zu der Außenhülse. Vorteilhaft erstreckt sich der Gummikörper, vorzugsweise in radialer Richtung, von dem Innenteil bis zu jeder der Halbschalen. Bevorzugt ist der Gummikörper festhafthaftend und/oder stoffschlüssig mit dem Innenteil verbunden. Beispielsweise ist der Gummikörper an das Innenteil anvulkanisiert. Der Gummikörper ist vorzugsweise festhafthaftend und/oder stoffschlüssig mit jeder der Halbschalen verbunden. Beispielsweise ist der Gummikörper an jede der Halbschalen anvulkanisiert. Vorteilhaft ist jede der Halbschalen, insbesondere zumindest teilweise, in den Gummikörper eingebettet und/oder einvulkanisiert. Bevorzugt sind die Halbschalen an ihren einander zugewandten umfangsseitigen Enden oder Endflächen frei oder im Wesentlichen frei von dem Material des Gummikörpers. Gemäß einer möglichen Ausgestaltung können die einander zugewandten umfangsseitigen Enden der Halbschalen aber mit einer, insbesondere dünnen, Gummihaut bedeckt sein, die beispielsweise mit dem Gummikörper verbunden oder durch diesen gebildet ist. Ferner sind die Vorsprünge und/oder die Vertiefungen vorzugsweise frei oder im Wesentlichen frei von dem Material des Gummikörpers. Gemäß einer möglichen Ausgestaltung können die Vorsprünge und/oder die Vertiefungen begrenzende Wandungen aber mit einer, insbesondere dünnen, Gummihaut bedeckt sein, die beispielsweise mit dem Gummikörper verbunden oder durch diesen gebildet ist. Bevorzugt besteht der Gummikörper aus einem Elastomer und/oder Gummi. Der Gummikörper kann beispielsweise auch als Elastomerkörper bezeichnet werden. Ferner kann das Gummilager z.B. als Elastomerlager bezeichnet werden.

Bevorzugt erstrecken sich die Vorsprünge in Umfangsrichtung von den oder von den jeweiligen umfangsseitigen Enden der Halbschalen weg. Vorteilhaft ist die Form der Vertiefungen an die Form der Vorsprünge angepasst. Vorzugsweise ist die Form jeder Vertiefung an die Form desjenigen Vorsprungs der Vorsprünge angepasst, der in die oder die jeweilige Vertiefung eingerückt oder einrückbar ist. Erfindungsgemäß ist in jede der Vertiefungen genau einer der Vorsprünge eingerückt oder einrückbar, an dessen Form die Form der oder der jeweiligen Vertiefung angepasst ist. Durch das Anpassen der Form der Vertiefungen an die Form der Vorsprünge kann eine Beweglichkeit der Halbschalen relativ zueinander eingeschränkt oder vermieden werden, insbesondere wenn die Vorsprünge in die Vertiefungen eingerückt sind.

Gemäß einer Ausgestaltung weist jede der Halbschalen einen oder genau einen der Vorsprünge und eine oder genau eine der Vertiefungen auf. Dabei sind der Vorsprung und die Vertiefung jeder Halbschale vorzugsweise an unterschiedlichen umfangsseitigen Enden der oder der jeweiligen Halbschale vorgesehen. Somit sind die Halbschalen besonders einfach herstellbar. Ferner ist dadurch die Einrückbarkeit der Vorsprünge in die Vertiefungen weniger anfällig gegenüber Fertigungstoleranzen als bei einer größeren Anzahl an Vorsprüngen und Vertiefungen.

Bevorzugt ist jede der Vertiefungen in axialer Richtung beidseitig begrenzt. Hierdurch kann eine axiale Beweglichkeit der Halbschalen relativ zueinander eingeschränkt oder vermieden werden, insbesondere wenn die Vorsprünge in die Vertiefungen eingerückt sind.

Vorteilhaft ist jede der Vertiefungen in radialer Richtung einseitig oder zumindest einseitig oder beidseitig begrenzt. Hierdurch eine kann eine radiale Beweglichkeit der Halbschalen relativ zueinander, vorzugsweise in einer radialen Richtung, die durch die Vorsprünge hindurch verläuft, eingeschränkt oder vermieden werden, insbesondere wenn die Vorsprünge in die Vertiefungen eingerückt sind. Bevorzugt sind die Vertiefungen als in den Außenumfangsflächen und/oder in den Innenumfangsflächen der Halbschalen eingebrachte Nuten ausgebildet. Vorzugsweise sind die Nuten jeweils zu dem jeweiligen umfangsseitigen Ende oder zu einem der umfangsseitigen Enden der jeweiligen Halbschalen hin offen.

Gemäß einer Weiterbildung weist jeder der Vorsprünge einen sich in axialer Richtung erstreckenden Rand und zwei sich in oder näherungsweise in Umfangsrichtung erstreckende Ränder auf, die an ihren Übergängen zu dem sich in axialer Richtung erstreckenden Rand abgeschrägt sind und/oder Fasen aufweisen. Der sich in axialer Richtung erstreckenden Rand jedes Vorsprungs ist insbesondere an dem oder einem umfangsseitigen, vorzugsweise freien, Ende des oder des jeweiligen Vorsprungs vorgesehen. Die beiden sich in oder näherungsweise in Umfangsrichtung erstreckenden Ränder jedes Vorsprungs sind insbesondere an den oder an axialen, vorzugsweise freien, Enden des oder des jeweiligen Vorsprungs vorgesehen. Durch die Abschrägungen oder Fasen ist eine Einrückhilfe oder Einführhilfe für die Vorsprünge beim Einrücken in die Vertiefungen gegeben, falls diese aufgrund von Fertigungstoleranzen geringfügig in axialer Richtung gegenüber den Vorsprüngen versetzt sind. Bevorzugt ist jeder der Vorsprünge, vorzugsweise in Umfangsrichtung, in Form eines, insbesondere gleichschenkligen, Trapezes ausgebildet, welches sich bevorzugt zu seinem umfangsseitigen, vorzugsweise freien, Ende hin verjüngt. Auch hierdurch ist eine Realisierungsmöglichkeit für eine Einrückhilfe oder Einführhilfe gegeben, falls die Vertiefungen aufgrund von Fertigungstoleranzen geringfügig in axialer Richtung gegenüber den Vorsprüngen versetzt sind.

Gemäß einer Ausgestaltung ist die Innenumfangsfläche der Außenhülse zu ihren beiden axialen Enden hin konisch erweitert. Vorteilhaft sind die beiden axialen Enden der Außenhülse in axialer Richtung voneinander abgewandt. Bevorzugt weist die Innenumfangsfläche jeder Halbschale zwei in axialer Richtung hintereinander liegende Flächenabschnitte auf, von denen ein erster Flächenabschnitt bis zu einem ersten axialen Ende der oder der jeweiligen Halbschale hin, insbesondere gegenüber der axialen Richtung und/oder der Lagerlängsachse, nach außen geneigt verläuft und ein zweiter Flächenabschnitt bis zu einem zweiten axialen Ende der oder der jeweiligen Halbschale hin, insbesondere gegenüber der axialen Richtung und/oder der Lagerlängsachse, nach außen geneigt verläuft. Vorzugsweise gehen die beiden Flächenabschnitte jeder Halbschale, insbesondere in axialer Richtung, ineinander über. Alternativ ist, vorzugsweise in axialer Richtung, zwischen den beiden Flächenabschnitten jeder Halbschale z.B. ein mittlerer Flächenabschnitt vorgesehen, der beispielsweise in axialer Richtung verläuft. Bevorzugt sind die beiden axialen Enden jeder Halbschale in axialer Richtung voneinander abgewandt. Dies erleichtert insbesondere das Einführen von Einsätzen eines Vulkanisationswerkzeugs zum Ausbilden des Gummikörpers in die Außenhülse. Andernfalls bestünde die Gefahr, dass es aufgrund von Fertigungstoleranzen beim Schließen des Vulkanisationswerkzeugs zu einem Aufsetzen der Werkzeugeinsätze auf Bereiche der Innenumfangsfläche der Außenhülse kommt, was zu Fehlstellungen der Halbschalen im geschlossenen Vulkanisationswerkzeug führen kann. Beispielsweise verläuft die Außenumfangsfläche der Außenhülse und/oder jeder Halbschale in axialer Richtung, insbesondere insgesamt, gerade oder näherungsweise gerade.

Erfindungsgemäß weist die Innenfläche oder Innenumfangsfläche jedes Vorsprungs zwei in axialer Richtung hintereinander liegende Flächenabschnitte auf, von denen ein erster Flächenabschnitt bis zu einem ersten axialen Ende des oder des jeweiligen Vorsprungs hin, insbesondere gegenüber der axialen Richtung und/oder der Lagerlängsachse, nach außen geneigt verläuft und ein zweiter Flächenabschnitt bis zu einem zweiten axialen Ende des oder des jeweiligen Vorsprungs hin, insbesondere gegenüber der axialen Richtung und/oder der Lagerlängsachse, nach außen geneigt verläuft. Vorzugsweise gehen die beiden Flächenabschnitte jedes Vorsprungs, insbesondere in axialer Richtung, ineinander über. Alternativ ist, vorzugsweise in axialer Richtung, zwischen den beiden Flächenabschnitten jedes Vorsprungs z.B. ein mittlerer Flächenabschnitt vorgesehen, der beispielsweise in axialer Richtung verläuft. Bevorzugt sind die beiden axialen Enden jedes Vorsprungs in axialer Richtung voneinander abgewandt. Auch hierdurch wird z.B. das Einführen von Einsätzen oder der Einsätze des oder eines Vulkanisationswerkzeugs in die Außenhülse erleichtert. Vorzugsweise verläuft die Außenfläche oder Außenumfangsfläche jedes Vorsprungs in axialer Richtung, insbesondere insgesamt, gerade oder näherungsweise gerade.

Gemäß einer Weiterbildung ist zwischen den einander zugewandten umfangsseitigen Enden der Halbschalen in Umfangsrichtung jeweils ein Spalt vorgesehen. Bevorzugt werden die Spalte beim Einbau und/oder Einbringen und/oder Einpressen des Gummilagers in ein Lageraufnahmebauteil geschlossen oder verkleinert. Vorteilhaft rücken durch das Schließen oder Verkleinern der Spalte die Vorsprünge, insbesondere vollständig, in die Vertiefungen ein. Bevorzugt werden durch das Schließen oder Verkleinern der Spalte die einander zugewandten umfangsseitigen Enden der Halbschalen aneinander angelegt. Vorteilhaft wird durch das Schließen oder Verkleinern der Spalte der Gummikörper unter, insbesondere radiale, Vorspannung gesetzt. Beispielsweise ist die Höhe der Vorspannung, insbesondere somit, durch die Spaltbreite der Spalte vor dem Schließen oder Verkleinern der Spalte einstellbar.

Das Einrücken der Vorsprünge in die Vertiefungen wird bevorzugt als Verschachteln bezeichnet. Die Vertiefungen und die in diese eingerückten oder einrückbaren Vorsprünge bilden vorzugsweise eine Verschachtelung.

Zwischen dem Innenteil und der Außenhülse und/oder zwischen dem Innenteil und den Halbschalen sind bevorzugt Ausnehmungen in dem Gummikörper vorgesehen, die sich vorzugsweise in axialer Richtung erstrecken und beispielsweise als Nieren bezeichnet werden. Vorteilhaft ist zwischen dem Innenteil und den einander zugewandten umfangsseitigen Enden der Halbschalen jeweils eine dieser Ausnehmungen vorgesehen. Beispielsweise erstrecken sich die Ausnehmungen in axialer Richtung durch den Gummikörper hindurch. Alternativ sind die Ausnehmungen, insbesondere in axialer Richtung, z.B. taschenförmig und/oder die Ausnehmungen erstrecken sich, insbesondere in axialer Richtung, z.B. in den Gummikörper hinein und enden in diesem. In diesem Fall ist es möglich, das zwei oder jeweils zwei der Ausnehmungen in axialer Richtung einander gegenüberliegend angeordnet sind und zusammen ein oder jeweils ein Ausnehmungspaar bilden. Die Anzahl der Ausnehmungen beträgt vorzugsweise zwei oder vier. Vorteilhaft beträgt die Anzahl der Ausnehmungspaare zwei. Bevorzugt sind die Ausnehmungen im Querschnitt jeweils rechteckig oder oval. Beispielsweise sind die Ausnehmungen und/oder die Ausnehmungspaare, insbesondere in radialer Richtung, unterschiedlich groß. Hierdurch kann z.B. eine in Richtung der größeren Ausnehmung und/oder des größeren Ausnehmungspaars wirkende größere Belastung des Gummikörpers im eingebauten Zustand des Gummilagers berücksichtigt werden. Alternativ sind die Ausnehmungen und/oder die Ausnehmungspaare z.B. gleich groß. Vorteilhaft liegen die Ausnehmungen oder die Ausnehmungspaare in radialer Richtung und/oder bezüglich der Lagerlängsachse einander gegenüber.

Am Innenumfang der Außenhülse und/oder am Innenumfang der Halbschalen sind bevorzugt Axialanschläge, insbesondere in Form von Vorsprüngen, vorgesehen, die sich vorzugsweise in radialer Richtung erstrecken. Vorteilhaft bilden die Axialanschläge Axialanschlagspaare, wobei die Axialanschläge jedes Axialanschlagpaars in axialer Richtung im Abstand zueinander angeordnet sind. Vorzugsweise liegen die Axialanschlagspaare in radialer Richtung und/oder bezüglich der Lagerlängsachse einander gegenüber. Bevorzugt ist das Innenteil in axialer Richtung zwischen den Axialanschlägen jedes Axialanschlagpaars angeordnet und/oder formschlüssig gesichert. Vorteilhaft sind die Axialanschläge gegenüber den einander zugewandten umfangsseitigen Enden der Halbschalen in Umfangsrichtung, beispielsweise um 90°, versetzt. Die Anzahl der Axialanschläge beträgt vorzugsweise zwei oder vier. Vorteilhaft beträgt die Anzahl der Axialanschlagspaare zwei. An jeder der Halbschalen ist bevorzugt eines der Axialanschlagpaare vorgesehen. Durch die Axialanschläge ist insbesondere eine axiale Bewegung des Innenteils gegenüber der Außenhülse und/oder gegenüber den Halbschalen begrenzbar.

Die Erfindung betrifft ferner eine Baugruppe mit einem oder wenigstens einem erfindungsgemäßen Gummilager und einem Lageraufnahmebauteil, in dem ein oder wenigstens ein, vorzugsweise zylindrisches, Lageraufnahmeloch vorgesehen ist, in welches das Gummilager, insbesondere mit seiner Außenhülse, eingebracht und/oder eingesetzt und/oder eingepresst ist. Die erfindungsgemäße Baugruppe und/oder deren Gummilager kann gemäß allen im Zusammenhang mit dem erfindungsgemäßen Gummilager erläuterten Ausgestaltungen weitergebildet sein. Ferner kann das erfindungsgemäße Gummilager gemäß allen im Zusammenhang mit der erfindungsgemäßen Baugruppe erläuterten Ausgestaltungen weitergebildet sein.

Die Baugruppe ist insbesondere für ein Fahrzeug vorgesehen, welches vorzugsweise ein Kraftfahrzeug ist. Vorteilhaft ist oder bildet die Baugruppe eine Fahrzeugbaugruppe.

Bevorzugt werden die Vorsprünge durch das Einbringen und/oder Einpressen des Gummilagers in das Lageraufnahmeloch, insbesondere vollständig, in die Vertiefungen eingerückt. Vorteilhaft werden durch das Einbringen und/oder Einpressen des Gummilagers in das Lageraufnahmeloch die in Umfangsrichtung zwischen den einander zugewandten umfangsseitigen Enden der Halbschalen vorgesehen Spalte verkleinert oder geschlossen. Beispielsweise werden durch das Einbringen und/oder Einpressen des Gummilagers in das Lageraufnahmeloch die einander zugewandten umfangsseitigen Enden der Halbschalen aneinander angelegt. Vorteilhaft wird durch das Einbringen und/oder Einpressen des Gummilagers in das Lageraufnahmeloch der Gummikörper unter, insbesondere radiale, Vorspannung gesetzt.

Gemäß einer Weiterbildung sind die Vorsprünge, insbesondere vollständig, in die Vertiefungen eingerückt. Vorteilhaft steht der Gummikörper unter, insbesondere radialer, Vorspannung. Bevorzugt sind die Spalte geschlossen. Vorzugsweise liegen die einander zugewandten umfangsseitigen Enden der Halbschalen in Umfangsrichtung aneinander an. Vorteilhaft liegt der Gummikörper in einer gegenüber den einander zugewandten umfangsseitigen Enden der Halbschalen in Umfangsrichtung um 90° versetzten Richtung an der Außenhülse und/oder an den Halbschalen an.

Das Lageraufnahmebauteil ist oder umfasst beispielsweise eine das Lageraufnahmeloch begrenzende Lageraufnahmehülse und/oder das Lageraufnahmebauteil weist z.B. ein das Lageraufnahmeloch bildendes Lagerauge auf. Das Lageraufnahmebauteil ist oder bildet insbesondere ein, vorzugsweise zweites, Bauteil, welches bevorzugt ein, vorzugsweise zweites, Fahrzeugbauteil ist.

Das Lageraufnahmebauteil ist oder bildet bevorzugt einen formstabilen Körper. Beispielsweise besteht das Lageraufnahmebauteil aus Kunststoff oder aus Metall. Vorzugsweise besteht das Lageraufnahmebauteil aus Aluminium oder aus Magnesium oder aus einem Eisenwerkstoff, wie z.B. Stahl.

Das erste Bauteil oder Fahrzeugbauteil ist z.B. ein Fahrzeugaufbau, und das zweite Bauteil oder Fahrzeugbauteil ist z.B. ein Achsträger oder Fahrschemel. Alternativ ist das zweite Bauteil oder Fahrzeugbauteil z.B. ein Fahrzeugaufbau, und das erste Bauteil oder Fahrzeugbauteil ist z.B. ein Achsträger oder Fahrschemel. Bei dem Achsträger handelt es sich bevorzugt um einen Hinterachsträger.

Gemäß einer vorteilhaften Ausgestaltung des Gummilagers und/oder der Baugruppe ist die verschachtelte Ausführung in den baugleichen Halbschalen integriert. Das Vulkanisationswerkzeug umfasst bevorzugt eine Form mit einem ersten oder oberen Einsatz, einem zweiten oder unteren Einsatz und zwei getrennten Leisten. Das Beschicken der Halbschalen ins Vulkanisationswerkzeug erfolgt bevorzugt in den geteilten Leisten, insbesondere 90° zur Formtrennung. So können die Konturen der Verschachtelungen gut in das Gummilager übertragen werden. Die Verschachtelung sowie die Innenkontur der Kontaktfläche sind vorzugsweise zum oberen und unteren Einsatz hin konisch gestaltet. Dadurch wird insbesondere beim Schließen der Form ein Aufsetzen des Einsatzes zur Halbschale verhindert und die Halbschalen werden im Bereich ihrer umfangsseitigen Enden im geschlossenen Zustand der Form vorzugsweise an Abdichtungen der geteilten Leisten gedrückt. Bevorzugt werden fertigungsbedingte Toleranzen der Halbschalen berücksichtigt und ein prozesssicheres Ergebnis bei der Abdichtung des Gummis erzielt. Insbesondere ist eine spiel- und gummifreie Anlagekontur zwischen den Halbschalen die Basis für eine bewegungsfreie Verschachtelung. Geringfügige Gummireste in den Formtrennungen wirken sich dabei aber nicht nachteilig aus. Ist das Lager erst einmal im Fahrzeug montiert, ist oder wird der Spalt zwischen den Halbschalen vorzugsweise geschlossen, sodass sich insbesondere hohe radiale Steifigkeitsverhältnisse erreichen lassen. Die Verschachtelung, vorzugsweise in Verbindung mit einem Hinterachsträger oder Fahrschemel als Lageraufnahmebauteil, unterbindet insbesondere eine relative Verschiebung in radialer und axialer Richtung. Bevorzugt wird das Gesamtsystem somit steifer und Reibungsgeräusche werden unterbunden.

Die Erfindung wird nachfolgend anhand einer bevorzugten Ausführungsform unter Bezugnahme auf die Zeichnung beschrieben. In der Zeichnung zeigen:
Fig. 1 eine Seitenansicht eines Gummilagers gemäß einer Ausführungsform,
Fig. 2 einen Schnitt durch das Gummilager entlang der aus Fig. 1 ersichtlichen Schnittlinie A - A,
Fig. 3 einen Schnitt durch das Gummilager entlang der aus Fig. 1 ersichtlichen Schnittlinie B - B,
Fig. 4 eine perspektivische Teilansicht eines Vulkanisationswerkzeugs zur Herstellung des Gummilagers und
Fig. 5 eine schematische und teilweise geschnittene Seitenansicht einer Baugruppe mit einem Gummilager gemäß der Ausführungsform.

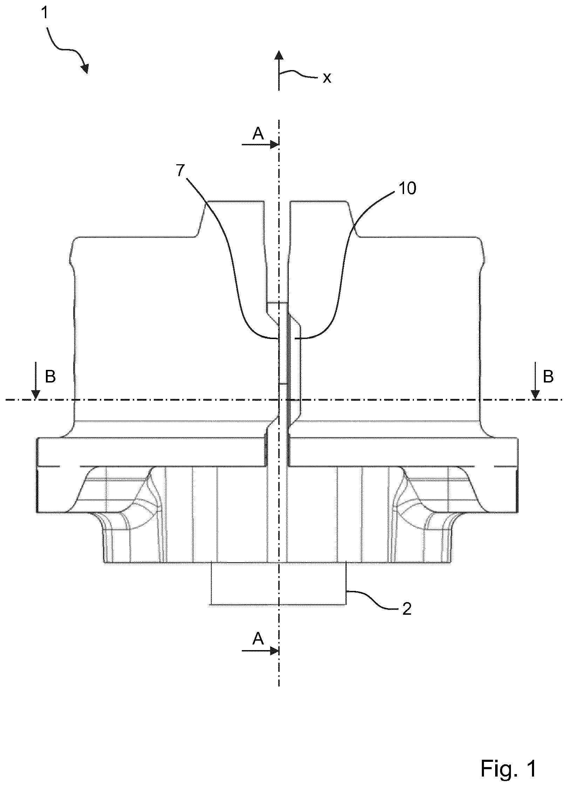

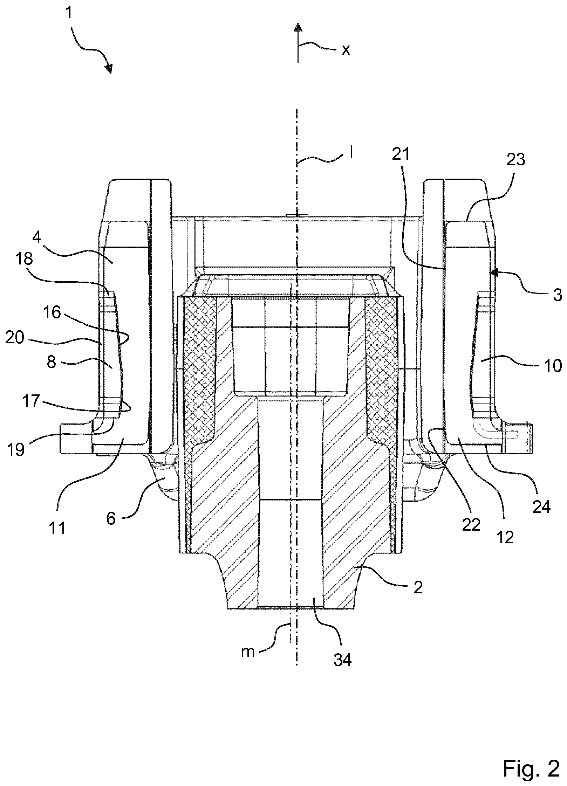

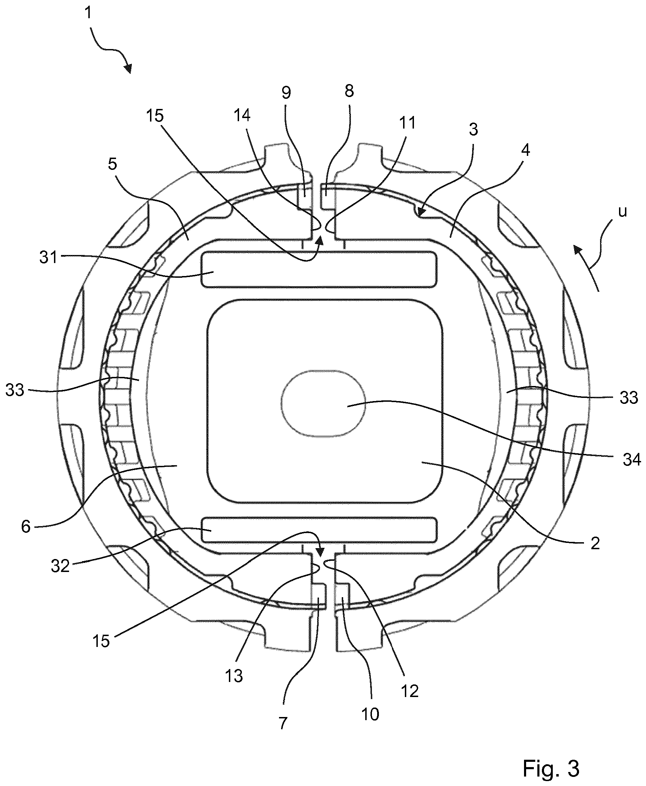

Aus Fig. 1 ist eine Seitenansicht eines Gummilagers 1 gemäß einer Ausführungsform ersichtlich, wobei Fig. 2 einen Schnitt durch das Gummilager 1 entlang der aus Fig. 1 ersichtlichen Schnittlinie A - A und Fig. 3 einen Schnitt durch das Gummilager 1 entlang der aus Fig. 1 ersichtlichen Schnittlinie B - B zeigt. Das Gummilager 1 umfasst ein sich in einer axialen Richtung x erstreckendes Innenteil 2, eine das Innenteil 2 im Abstand umringende Außenhülse 3, die aus zwei als Gleichteile ausgebildeten Halbschalen 4 und 5 besteht und/oder zusammengesetzt ist und einem zwischen dem Innenteil 2 und der Außenhülse 3 angeordneten Gummikörper 6, wobei die Halbschalen 4 und 5 mittels des Gummikörpers 6 mit dem Innenteil 2 verbunden sind. Ferner ist dem Gummilager 1 eine in axialer Richtung x verlaufende Lagerlängsachse I zugeordnet, die insbesondere mittig durch die Außenhülse 3 hindurch verläuft. An ihren einander zugewandten umfangsseitigen Enden weisen die Halbschalen 4 und 5 Vorsprünge 7 und 8 und Vertiefungen 9 und 10 auf, in welche die Vorsprünge 7 und 8 einrückbar sind. Dabei weist die Halbschale 4 den Vorsprung 8 und die Vertiefung 10 auf. Ferner weist die Halbschale 5 den Vorsprung 7 und die Vertiefung 9 auf.

Der Vorsprung 8 und die Vertiefung 10 sind an unterschiedlichen umfangsseitigen Enden 11 und 12 der Halbschale 4 vorgesehen, wobei der Vorsprung 8 an einem ersten der umfangsseitigen Enden 11 der Halbschale 4 und die Vertiefung 10 an einem zweiten der umfangsseitigen Enden 12 der Halbschale 4 vorgesehen ist. Dabei erstreckt sich der Vorsprung 8 in Umfangsrichtung u von dem ersten umfangsseitigen Ende 11 der Halbschale 4 weg. Ferner ist die Vertiefung 10 als in die Außenumfangsfläche der Halbschale 4 eingebrachte Nut ausgebildet, die zu dem zweiten umfangsseitigen Ende 12 der Halbschale 4 hin offen ist. Die Halbschale 4 wird z.B. auch als erste Halbschale bezeichnet.

Der Vorsprung 7 und die Vertiefung 9 sind an unterschiedlichen umfangsseitigen Enden 13 und 14 der Halbschale 5 vorgesehen, wobei der Vorsprung 7 an einem ersten der umfangsseitigen Enden 13 der Halbschale 5 und die Vertiefung 9 an einem zweiten der umfangsseitigen Enden 14 der Halbschale 5 vorgesehen ist.

Dabei erstreckt sich der Vorsprung 7 in Umfangsrichtung u von dem ersten umfangsseitigen Ende 13 der Halbschale 5 weg. Ferner ist die Vertiefung 9 als in die Außenumfangsfläche der Halbschale 5 eingebrachte Nut ausgebildet, die zu dem zweiten umfangsseitigen Ende 14 der Halbschale 5 hin offen ist. Die Halbschale 5 wird z.B. auch als zweite Halbschale bezeichnet.

Zwischen dem Innenteil 2 und der Außenhülse 3 sind Ausnehmungen 31 und 32 in dem Gummikörper 6 vorgesehen, die sich in axialer Richtung x erstrecken und im Querschnitt rechteckig ausgebildet sind, wobei zwischen dem Innenteil 2 und den einander zugewandten umfangsseitigen Enden der Halbschalen 4 und 5 jeweils eine der Ausnehmungen vorgesehen ist. Gemäß der dargestellten Ausführungsform sind die Ausnehmungen 31 und 32, insbesondere in radialer Richtung, unterschiedlich groß. Alternativ können die Ausnehmungen aber auch die gleiche Größe aufweisen. Ferner sind am Innenumfang der Halbschalen 4 und 5 sich in radialer Richtung erstreckende Axialanschläge 33 für das Innenteil 2 vorgesehen, wobei die Axialanschläge 33 gegenüber den einander zugewandten umfangsseitigen Enden der Halbschalen 4 und 5 in Umfangsrichtung u um 90° versetzt sind. Mittels der Axialanschläge 33 ist insbesondere eine axiale Bewegung des Innenteils 2 gegenüber der Außenhülse 3 begrenzbar. Auch erstreckt sich durch das Innenteil 2 in axialer Richtung x ein Durchgangsloch 34 hindurch. Dem Innenteil 2 ist eine Innenteillängsachse m zugeordnet, die mittig durch das Innenteil 2 verläuft. Die Innenteillängsachse m ist, insbesondere aufgrund der unterschiedlichen Größe der Ausnehmungen 31 und 32, gegenüber der Lagerlängsachse I versetzt und verläuft bevorzugt parallel zu dieser.

Zwischen den einander zugewandten umfangsseitigen Enden der Halbschalen 4 und 5 ist in Umfangsrichtung u jeweils ein Spalt 15 vorgesehen, der durch Zusammendrücken der Halbschalen 4 und 5 geschlossen oder verkleinert werden kann. Durch das Zusammendrücken rücken auch die Vorsprünge 7 und 8 in die Vertiefungen 9 und 10 ein, wobei der Vorsprung 7 in die Vertiefung 10 und der Vorsprung 8 in die Vertiefung 9 einrückt. Ferner wird der Gummikörper 6 durch das Zusammendrücken unter Vorspannung gesetzt.

Aus Fig. 1 ist ersichtlich, dass der Vorsprung 7 in Form eines gleichschenkligen Trapezes ausgebildet ist, welches sich zu seinem umfangsseitigen freien Ende hin verjüngt. Die Form der Vertiefung 10 ist an die Form des Vorsprungs 7 angepasst, sodass die Vertiefung 10 in Form eines entsprechenden oder deckungsgleichen Trapezes ausgebildet ist, welches sich zu dem gegenüberliegenden Vorsprung 7 hin erweitert. Da die Halbschalen 4 und 5 als Gleichteile ausgebildet sind, ist der Vorsprung 8 entsprechend dem Vorsprung 7 ausgebildet. Ferner ist die Vertiefung 9 entsprechend der Vertiefung 10 ausgebildet. Die Trapezform erleichtert das Einrücken der Vorsprünge in die Vertiefungen beim Zusammendrücken der Halbschalen. Ferner ist aus den Fig. 1 und 2 ersichtlich, dass die Vertiefung 10 in axialer Richtung x beidseitig und in radialer Richtung nach innen hin begrenzt ist. Dies gilt entsprechend für die Vertiefung 9. Dabei wird als radiale Richtung insbesondere eine oder jedwede quer zur axialen Richtung x und/oder quer zur Lagerlängsachse I verlaufende Richtung bezeichnet. Der Ausdruck "nach innen hin" bedeutet insbesondere in Richtung zur Lagerlängsachse I und/oder zum Inneren das Gummilagers 1 hin.

Aus Fig. 2 ist ersichtlich, dass die Innenfläche oder Innenumfangsfläche des Vorsprungs 8 zwei in axialer Richtung x hintereinander liegende Flächenabschnitte 16 und 17 aufweist, von denen ein erster Flächenabschnitt 16 bis zu einem ersten axialen Ende 18 des Vorsprungs 8 hin gegenüber der axialen Richtung x nach außen geneigt verläuft und ein zweiter Flächenabschnitt 17 bis zu einem zweiten axialen Ende 19 des Vorsprungs 8 hin gegenüber der axialen Richtung x nach außen geneigt verläuft. Die Außenfläche oder Außenumfangsfläche 20 des Vorsprungs 8 verläuft in axialer Richtung x hingegen insgesamt gerade. Da die Halbschalen 4 und 5 als Gleichteile ausgebildet sind, ist der Vorsprung 7 entsprechend dem Vorsprung 8 ausgebildet. Ferner ist die Form der Vertiefung 10 an die Form des Vorsprungs 7 und/oder an die Form des Vorsprungs 8 angepasst. Da die Halbschalen 4 und 5 als Gleichteile ausgebildet sind, ist die Vertiefung 9 entsprechend der Vertiefung 10 ausgebildet.

Ferner ist aus Fig. 2 ersichtlich, dass die Innenumfangsfläche der Halbschale 4 zwei in axialer Richtung x hintereinander liegende Flächenabschnitte 21 und 22 aufweist, von denen ein erster Flächenabschnitt 21 bis zu einem ersten axialen Ende 23 der Halbschale 4 hin gegenüber der axialen Richtung x nach außen geneigt verläuft und ein zweiter Flächenabschnitt 22 bis zu einem zweiten axialen Ende 24 der Halbschale 4 hin gegenüber der axialen Richtung x nach außen geneigt verläuft. Da die Halbschalen 4 und 5 als Gleichteile ausgebildet sind, ist die Innenumfangsfläche der Halbschale 5 entsprechend der Innenumfangsfläche der Halbschale 4 ausgebildet. Diese Ausbildung der Halbschalen 4 und 5 führt insgesamt dazu, dass Innenumfangsfläche der Außenhülse 3 zu ihren beiden axialen Enden hin konisch erweitert ist.

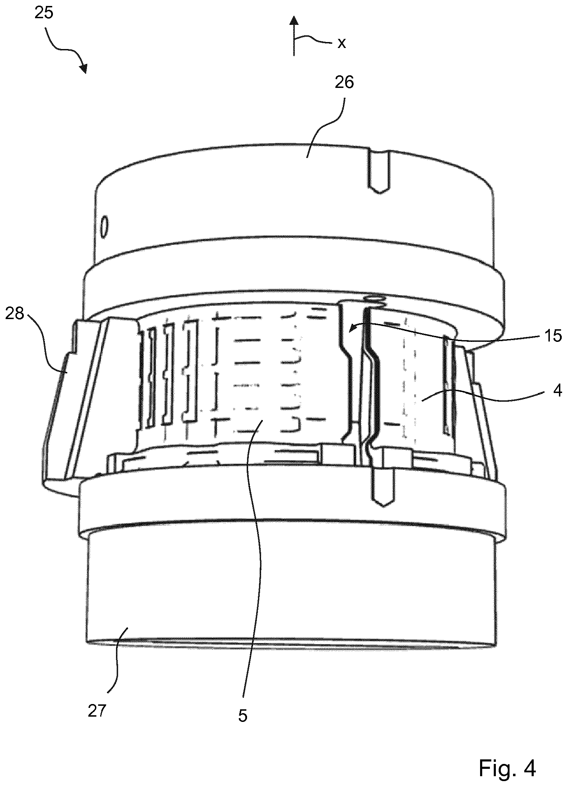

Aus Fig. 4 ist eine perspektivische Teilansicht eines Vulkanisationswerkzeugs 25 ersichtlich, welches eine Form mit einem ersten Einsatz 26, einem zweiten Einsatz 27 und Leisten 28 aufweist, von denen lediglich eine Leiste dargestellt ist, sodass die in das Vulkanisationswerkzeug 25 eingesetzten Halbschalen 4 und 5 erkennbar sind. Die Halbschalen 4 und 5 sind dabei derart in das Vulkanisationswerkzeug 25 eingesetzt, dass eine in axialer Richtung x und zwischen den einander zugewandten umfangsseitigen Enden der Halbschalen 4 und 5 verlaufende Halbschalen-Trennebene gegenüber einer in axialer Richtung x verlaufenden Leisten-Trennebene der Leisten 28 um 90° um die Lagerlängsachse I versetzt ist. Ferner ist in das Vulkanisationswerkzeug 25 das Innenteil 2 eingesetzt, welches in Fig. 4 allerdings durch andere Teile verdeckt und somit nicht erkennbar ist. Die geneigten Flächenabschnitte 16, 17, 21 und 22 verhindern insbesondere ein Aufsetzen von in den Raum zwischen den Halbschalen 4 und 5 eingeführten Bereichen der Einstätze 26 und 27 während des Einführens. Der mittels des Vulkanisationswerkzeugs 25 auszubildende Gummikörper 6 ist in der Darstellung gemäß Fig. 4 noch nicht vorhanden. Sind die Halbschalen 4 und 5 sowie das Innenteil 2 in das Vulkanisationswerkzeug 25 eingesetzt, wird dessen Form geschlossen und der Gummikörper 6 durch Einspritzen und anschließendem Ausvulkanisieren von Gummi in die Form ausgebildet, wobei der Gummikörper 6 gleichzeitig festhaftend mit den Halbschalen 4 und 5 und mit dem Innenteil 2 verbunden wird. Ferner wird die Außenhülse 3 teilweise in den Gummikörper 6 eingebettet.

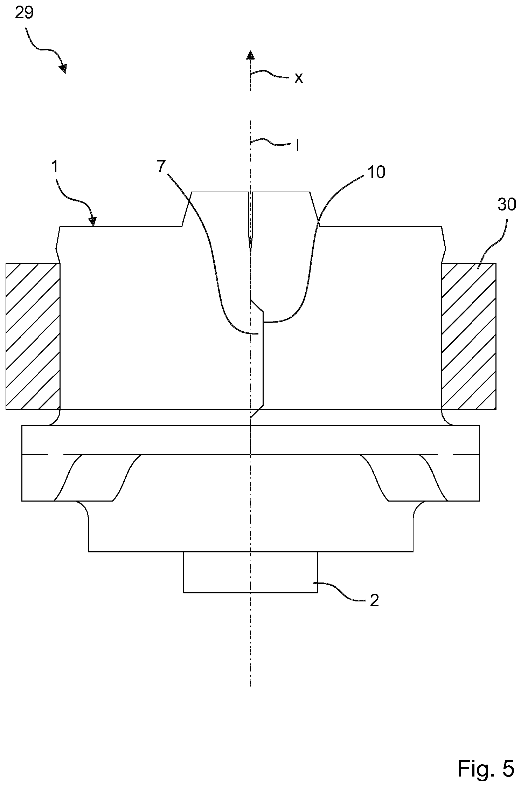

Fig. 5 zeigt eine schematische Ansicht einer Baugruppe 29 mit einem Gummilager 1 gemäß der Ausführungsform und einem geschnitten dargestellten Lageraufnahmebauteil 30 in Form einer Lageraufnahmehülse, die ein Lageraufnahmeloch begrenzt, in welches das Gummilager 1 eingepresst ist. Durch das Einpressen sind die Vorsprünge 7 und 8 in die Vertiefungen 9 und 10 eingerückt.

### Bezugszeichenliste

- 1: Gummilager
- 2: Innenteil des Gummilagers
- 3: Außenhülse des Gummilagers
- 4: erste Halbschale der Außenhülse
- 5: zweite Halbschale der Außenhülse
- 6: Gummikörper des Gummilagers
- 7: Vorsprung der zweiten Halbschale
- 8: Vorsprung der ersten Halbschale
- 9: Vertiefung der zweiten Halbschale
- 10: Vertiefung der ersten Halbschale
- 11: erstes umfangsseitiges Ende der ersten Halbschale
- 12: zweites umfangsseitiges Ende der ersten Halbschale
- 13: erstes umfangsseitiges Ende der zweiten Halbschale
- 14: zweites umfangsseitiges Ende der zweiten Halbschale
- 15: Spalt
- 16: erster Flächenabschnitt der Innenfläche des Vorsprungs
- 17: zweiter Flächenabschnitt der Innenfläche des Vorsprungs
- 18: erstes axiales Ende des Vorsprungs
- 19: zweites axiales Ende des Vorsprungs
- 20: Außenfläche des Vorsprungs
- 21: erster Flächenabschnitt der Innenumfangsfläche der Halbschale
- 22: zweiter Flächenabschnitt der Innenumfangsfläche der Halbschale
- 23: erstes axiales Ende der Halbschale
- 24: zweites axiales Ende der Halbschale
- 25: Vulkanisationswerkzeug
- 26: Einsatz des Vulkanisationswerkzeugs
- 27: Einsatz des Vulkanisationswerkzeugs
- 28: Leiste des Vulkanisationswerkzeugs
- 29: Baugruppe
- 30: Lageraufnahmebauteil
- 31: Ausnehmung
- 32: Ausnehmung
- 33: Axialanschlag
- 34: Durchgangsloch

- I: Lagerlängsachse
- m: Innenteillängsachse
- u: Umfangsrichtung
- x: axiale Richtung

## Patentansprüche

1. Gummilager mit einem sich in einer axialen Richtung (x) erstreckenden Innenteil (2), einer das Innenteil (2) im Abstand umringenden Außenhülse (3), die aus zwei als Gleichteile ausgebildeten Halbschalen (4, 5) besteht oder zusammengesetzt ist und einem zwischen dem Innenteil (2) und der Außenhülse (3) angeordneten Gummikörper (6), wobei die Halbschalen (4, 5) mittels des Gummikörpers (6) mit dem Innenteil (2) verbunden sind und an ihren einander zugewandten umfangsseitigen Enden Vorsprünge (7, 8) und Vertiefungen (9, 10) aufweisen, in welche die Vorsprünge (7, 8) eingerückt oder einrückbar sind, und wobei in jede der Vertiefungen (9, 10) genau einer der Vorsprünge (7, 8) eingerückt oder einrückbar ist, an dessen Form die Form die jeweiligen Vertiefung (9, 10) angepasst ist, **dadurch gekennzeichnet, dass** die Innenfläche jedes Vorsprungs (7, 8) zwei in axialer Richtung (x) hintereinander liegende Flächenabschnitte (16, 17) aufweist, von denen ein erster Flächenabschnitt (16) bis zu einem ersten axialen Ende (18) des Vorsprungs hin nach außen geneigt verläuft und ein zweiter Flächenabschnitt (17) bis zu einem zweiten axialen Ende (19) des Vorsprungs hin nach außen geneigt verläuft.

2. Gummilager nach Anspruch 1, **dadurch gekennzeichnet, dass** die Vorsprünge (7, 8) sich in Umfangsrichtung (u) von den jeweiligen umfangsseitigen Enden der Halbschalen (4, 5) weg erstrecken.

3. Gummilager nach Anspruch 1 oder 2, **dadurch gekennzeichnet, dass** jede der Halbschalen (4, 5) genau einen der Vorsprünge (7, 8) und genau eine der Vertiefungen (9, 10) aufweist, wobei der Vorsprung und die Vertiefung jeder Halbschale an unterschiedlichen umfangsseitigen Enden der jeweiligen Halbschale vorgesehen sind.

4. Gummilager nach einem der vorangehenden Ansprüche, **dadurch gekennzeichnet, dass** jede der Vertiefungen (9, 10) in axialer Richtung (x) beidseitig begrenzt ist.

5. Gummilager nach einem der vorangehenden Ansprüche, **dadurch gekennzeichnet, dass** jede der Vertiefungen (9, 10) in radialer Richtung zumindest einseitig begrenzt ist.

6. Gummilager nach einem der vorangehenden Ansprüche, **dadurch gekennzeichnet, dass** die Vertiefungen (9, 10) als in den Außenumfangsflächen der Halbschalen (4, 5) eingebrachte Nuten ausgebildet sind.

7. Gummilager nach einem der vorangehenden Ansprüche, **dadurch gekennzeichnet, dass** jeder der Vorsprünge (7, 8) in Form eines Trapezes ausgebildet ist, welches sich zu seinem umfangsseitigen freien Ende hin verjüngt.

8. Gummilager nach einem der vorangehenden Ansprüche, **dadurch gekennzeichnet, dass** die Innenumfangsfläche der Außenhülse (3) zu ihren beiden axialen Enden hin konisch erweitert ist.

9. Gummilager nach einem der vorangehenden Ansprüche, **dadurch gekennzeichnet, dass** die Außenfläche (20) jedes Vorsprungs in axialer Richtung (x) gerade verläuft.

10. Gummilager nach einem der vorangehenden Ansprüche, **dadurch gekennzeichnet, dass** zwischen den einander zugewandten umfangsseitigen Enden der Halbschalen (4, 5) in Umfangsrichtung (u) jeweils ein Spalt (15) vorgesehen ist.

11. Baugruppe mit wenigstens einem Gummilager (1) nach einem der vorangehenden Ansprüche und einem Lageraufnahmebauteil (30), in dem wenigstens ein Lageraufnahmeloch vorgesehen ist, in welches das Gummilager (1) eingebracht ist.

12. Baugruppe nach Anspruch 11, **dadurch gekennzeichnet, dass** die Vorsprünge (7, 8) in die Vertiefungen (9, 10) eingerückt sind.

## Claims

1. Rubber bearing having an inner part (2) extending in an axial direction (x) , an outer sleeve (3) surrounding the inner part (2) at a distance, which consists of or is composed of two half shells (4, 5) designed as identical parts, and a rubber body (6) arranged between the inner part (2) and the outer sleeve (3), wherein the half shells (4, 5) are connected to the inner part (2) by means of the rubber body (6) and have projections (7, 8) and depressions (9, 10) on their circumferential ends facing one another, in which the projections (7 8) are indented or indentable, and wherein exactly one of the projections (7, 8) is indented or indentable into each of the depressions (9, 10), to the shape of which the shape of the respective depression (9, 10) is adapted, **characterised in that** the inner surface of each projection (7, 8) has two surface sections (16, 17) lying one behind the other in the axial direction (x), from which a first surface section (16) runs inclined outwards to a first axial end (18) of the projection and a second surface section (17) runs inclined outwards to a second axial end (19) of the projection.

2. Rubber bearing according to claim 1, **characterised in that** the projections (7, 8) extend away from the respective circumferential ends of the half shells (4, 5) in the circumferential direction (u).

3. Rubber bearing according to claim 1 or 2, **characterised in that** each of the half shells (4, 5) has exactly one of the projections (7, 8) and exactly one of the depressions (9, 10), wherein the projection and the depression of the half shell are provided at different circumferential ends of the respective half shell.

4. Rubber bearing according to any one of the preceding claims, **characterised in that** each of the depressions (9, 10) is bounded on both sides in the axial direction (x).

5. Rubber bearing according to any one of the preceding claims, **characterised in that** each of the depressions (9, 10) is bounded at least on one side in the radial direction.

6. Rubber bearing according to any one of the preceding claims, **characterised in that** the depressions (9, 10) are formed as grooves introduced into the outer circumferential surfaces of the half shells (4, 5).

7. Rubber bearing according to any one of the preceding claims, **characterised in that** each of the projections (7, 8) is formed in the shape of a trapezoid, which tapers towards its circumferential free end.

8. Rubber bearing according to any one of the preceding claims, **characterised in that** the inner circumferential surface of the outer sleeve (3) is conically extended towards its two axial ends.

9. Rubber bearing according to any one of the preceding claims, **characterised in that** the outer surface (20) of each projection runs straight in the axial direction (x).

10. Rubber bearing according to any one of the preceding claims, **characterised in that** in each case a gap (15) is provided between the circumferential ends of the half shells (4, 5) facing one another in the circumferential direction (u).

11. Assembly with at least one rubber bearing (1) according to any one of the preceding claims and a bearing receptacle component (30), in which at least one bearing receptacle hole is provided, into which the rubber bearing (1) is inserted.

12. Assembly according to claim 11, **characterised in that** the projections (7, 8) are indented into the depressions (9, 10).

## Revendications

1. Support en caoutchouc avec une partie intérieure (2) s'étendant dans une direction axiale (x), une douille extérieure (3) entourant à distance la partie intérieure (2), qui est constituée ou composée de deux demi-coques (4, 5) réalisées sous forme de pièces identiques et un corps en caoutchouc (6) disposé entre la partie intérieure (2) et la douille extérieure (3), dans lequel les demi-coques (4, 5) sont reliées à la partie intérieure (2) au moyen du corps en caoutchouc (6) et présentent à leurs extrémités périphériques tournées l'une vers l'autre des saillies (7, 8) et des évidements (9, 10) dans lesquels les saillies (7, 8) sont rentrées ou peuvent être rentrées, et dans lequel exactement l'une des saillies (7, 8), à la forme de laquelle est adaptée la forme de l'évidement (9, 10) respectif, est rentrée ou peut être rentrér dans chacun des évidements (9, 10), **caractérisé en ce que** la surface intérieure de chaque saillie (7, 8) présente deux sections de surface (16, 17) situées l'une derrière l'autre dans la direction axiale (x), dont une première section de surface (16) s'étend vers l'extérieur jusqu'à une première extrémité axiale (18) de la saillie et une deuxième section de surface (17) s'étend vers l'extérieur jusqu'à une deuxième extrémité axiale (19) de la saillie.

2. Support en caoutchouc selon la revendication 1, **caractérisé en ce que** les saillies (7, 8) s'étendent dans la direction périphérique (u) en s'éloignant des extrémités périphériques respectives des demi-coques (4, 5).

3. Support en caoutchouc selon la revendication 1 ou 2, **caractérisé en ce que** chacune des demi-coques (4, 5) présente exactement l'une des saillies (7, 8) et exactement l'un des évidements (9, 10), dans lequel la saillie et l'évidement de chaque demi-coque sont prévus à différentes extrémités périphériques de la demi-coque respective.

4. Support en caoutchouc selon l'une quelconque des revendications précédentes, **caractérisé en ce que** chacun des évidements (9, 10) est délimité des deux côtés dans la direction axiale (x).

5. Support en caoutchouc selon l'une quelconque des revendications précédentes, **caractérisé en ce que** chacun des évidements (9, 10) est délimité au moins d'un côté dans la direction radiale.

6. Support en caoutchouc selon l'une quelconque des revendications précédentes, **caractérisé en ce que** les évidements (9, 10) sont réalisés sous forme de rainures ménagées dans les surfaces périphériques extérieures des demi-coques (4, 5).

7. Support en caoutchouc selon l'une quelconque des revendications précédentes, **caractérisé en ce que** chacune des saillies (7, 8) est réalisée sous forme d'un trapèze qui se rétrécit en direction de son extrémité libre périphérique.

8. Support en caoutchouc selon l'une quelconque des revendications précédentes, **caractérisé en ce que** la surface périphérique intérieure de la douille extérieure (3) est élargie de manière conique en direction de ses deux extrémités axiales.

9. Support en caoutchouc selon l'une quelconque des revendications précédentes, **caractérisé en ce que** la surface extérieure (20) de chaque saillie s'étend de manière rectiligne dans la direction axiale (x).

10. Support en caoutchouc selon l'une quelconque des revendications précédentes, **caractérisé en ce que** respectivement une fente (15) est prévue entre les extrémités périphériques tournées l'une vers l'autre des demi-coques (4, 5) dans la direction périphérique (u).

11. Ensemble avec au moins un palier en caoutchouc (1) selon l'une quelconque des revendications précédentes et un élément de réception de palier (30), dans lequel est prévu au moins un trou de réception de palier, dans lequel est inséré le palier en caoutchouc (1).

12. Ensemble selon la revendication 11, **caractérisé en ce que** les saillies (7, 8) sont rentrées dans les évidements (9, 10).
